# EUROPÄISCHE PATENTANMELDUNG

(11) **EP 4 656 885 A1**
(43) Veröffentlichungstag der Anmeldung: **03.12.2025**
(21) Anmeldenummer: 25174518.8
(22) Anmeldetag: 06.05.2025
(51) Int. Cl.: F04D 29/051, F04D 29/10, F04D 29/16, F16J 15/447

(54) **BERÜHRUNGSLOSE DYNAMISCHE DICHTUNG ZUR ABDICHTUNG EINES RADIALSPALTS**

(30) Priorität: 29.05.2024 DE 102024115122
(71) Anmelder: ebm-papst Mulfingen GmbH & Co. KG, 74673 Mulfingen (DE)
(72) Erfinder: Coksen, Ahmet, 74523 Schwäbisch Hall (DE); Karaefe, Emre, 74673 Mulfingen (DE)
(74) Vertreter: Staeger & Sperling Partnerschaftsgesellschaft mbB

(57) **Zusammenfassung**

Die Erfindung betrifft eine berührungslose dynamische Dichtung (1) zur Abdichtung eines Radialspalts (2), wobei die Dichtung (1) einen Innendichtkörper (10) und einen Außendichtkörper (20) mit einem Aufnahmeraum zur Aufnahme des Innendichtkörpers (10) aufweist, wobei der Innendichtkörper (10) eine konische Grundform aufweist und sich stufenweise verjüngt, wobei die Stufen (11) des Innendichtkörpers jeweils durch eine Radialaußenfläche (12) und eine Axialaußenfläche (13) bestimmt sind, wobei der Aufnahmeraum eine zu dem Innendichtkörper (10) korrespondierende konische Grundform aufweist und sich stufenweise verjüngt, wobei die Stufen (21) des Aufnahmeraums jeweils durch eine Radialinnenfläche (22) und eine Axialinnenfläche (23) bestimmt sind, wobei jeweils einer Radialaußenfläche (12) eine Radialinnenfläche (22) zugeordnet ist, welche abschnittsweise berührungslos unter Bildung eines radialen Dichtspalts (31) unmittelbar aneinander angrenzen, und einer jeweiligen Axialaußenfläche (13) jeweils eine Axialinnenfläche (23) zugeordnet ist, welche in Axialrichtung beabstandet sind, sodass zwischen den Axialaußenflächen (13) und den Axialinnenflächen (23) jeweils eine Wirbelkammer (32) zur Aufnahme eines Fluides gebildet ist, welche miteinander über die für das Fluid als Drosseln (31) wirkenden radialen Dichtspalte (31) verbunden sind.

## Beschreibung

Die Erfindung betrifft eine berührungslose dynamische Dichtung, welche auch als Labyrinthdichtung bezeichnet werden kann, zur Abdichtung eines Radialspalts. Dabei handelt es sich insbesondere um eine Dichtung für Zentrifugalkompressoren bzw. allgemein für Anwendungen mit hohen Drehzahlen von beispielsweise über 50.000 U/min.

Insbesondere kleine Zentrifugalkompressoren mit hohen Drehzahlen von typischerweise über 50.000 U/min erfordern in der Regel den Einsatz von berührungslosen Dichtungen, um einen parasitären Leckagestrom eines zu komprimierenden Fluides, insbesondere durch einen Radialspalt zwischen einem rotierenden Laufrad bzw. dessen rotierender Tragscheibe und einer feststehenden Rückwand des Laufrad- bzw. Maschinengehäuses, zu minimieren.

Üblicherweise werden hierfür Labyrinthdichtungen eingesetzt. In einigen Fällen werden Labyrinthdichtungen mit dünnen, ringförmigen Lamellen eingesetzt, welche in Axialrichtung in dem Radialspalt Bereiche scharf voneinander abgrenzen und dadurch einzelne Wirbelkammern bilden, wobei die Lamellen zugleich als Fluid-Drosseln zwischen den Wirbelkammern dienen. Labyrinthdichtungen im Allgemeinen sind beispielsweise aus dem Dokument DE 39 40 607 A1 bekannt.

Weiter sind auch aufeinanderfolgende gestufte Lamellen und Wirbelkammern bekannt, welche entsprechend unterschiedliche Dichtungsradien realisieren, wodurch die Kontrolle über den in den Wirbelkammern und durch die Drosseln strömenden Leckagestrom verbessert bzw. dieser reduziert wird.

Insbesondere die Möglichkeit, Stufendichtungen auf konischen Flächen anzuordnen, bietet sich aus konstruktiven Gründen an, da dadurch eine Welle, welche einen Teil der Dichtung bildet, besonders einfach in die Aufnahme eingesteckt werden kann, welche das Gegenstück der Welle bildet.

Aus beispielsweise den Schriften DE 11 2015 006 062 T5, DE 11 2016 005 643 T5, DE 11 2018 000 966 T5, US 8,784,046 B2, US 9,429,022 B2, US 10,557,363 B2, US 2019/0072185 A1 und DE 11 2015 006 039 T5 sind verschiedenste Varianten von Dichtungen bekannt, bei welchen solche Lamellen zur Ausbildung von Wirbelkammern mit einem abgestuften Aufbau kombiniert werden.

Diesen Dichtungen gemein ist jedoch, dass diese aufgrund der dünnen Lamellen in ihrer Herstellung teuer sind. So sind die Lamellen bzw. Finnen oftmals nur wenige Zehntel Millimeter breit, was die Herstellung unter Berücksichtigung der tatsächlich realisierbaren Fertigungstoleranzen entsprechend komplex macht. Hinzukommt auch, dass eine durch die Lamellen erfüllte Drosselwirkung nur bedingt durch deren radiale oder axiale Erstreckung steuerbar ist, da die Dicke der Lamellen in Axialrichtung keinen bzw. kaum Einfluss auf die Drosselwirkung besitzt und eine Änderung der radialen Erstreckung die Wirkung der Wirbelkammern unmittelbar stört.

Der Erfindung liegt deshalb die Aufgabe zugrunde, die vorgenannten Nachteile zu überwinden und eine berührungslos dynamische Dichtung sowie eine zugehörige Vorrichtung bereitzustellen, bei welcher ein Strömungswiderstand in der Dichtung konstruktiv beeinflussbar bzw. ein Leckagestrom durch die Dichtung sowie an der Dichtung wirkende Axialkräfte gezielt einstellbar sind und welche zugleich kostengünstig herstellbar ist.

Insbesondere ist auch vorteilhaft, wenn an der Tragscheibe und weiter vorzugsweise an den Flächen der Tragscheibe, welche dem Radialspalt bzw. einem Radseitenraum zugewandt sind, wirkende Axialkräfte durch die Dichtung gezielt einstellbar sind.

Diese Aufgabe wird durch die Merkmalskombination gemäß dem Hauptanspruch sowie auch gemäß dem nebengeordneten Anspruch gelöst.

Erfindungsgemäß wird daher eine berührungslose dynamische Dichtung vorgeschlagen, welche auch als Labyrinthdichtung und/oder Radialdichtung bezeichnet werden kann. Dabei dient die vorgeschlagene Dichtung zur Abdichtung eines Radialspalts zwischen einem radialinneren Innenkörper und einem den Innenkörper in Umfangsrichtung umlaufenden radialäußeren Außenkörper, welche relativ zueinander um eine Rotationsachse rotierbar sind, wobei der Innenkörper beispielsweise mit Drehzahlen größer 50.000 U/min in dem Außenkörper rotieren kann. Insbesondere kann die erfindungsgemäß vorgeschlagene Dichtung zur Abdichtung einer ein Flügel- bzw. Laufrad tragenden Welle als Innenkörper gegenüber einem Gehäuse als Außenkörper in beispielsweise einem Zentrifugalkompressor eingesetzt werden.

Klarstellend ist darauf hinzuweisen, dass die Dichtung einen Strömungswiderstand für einen Fluid- bzw. Leckagestrom eines Fluides durch den mittels der Dichtung reduzierten Radialspalt erhöhen soll, den Leckagestrom aber nicht zwingend vollständig unterbinden muss. Bei dem Fluid kann es sich abhängig von dem Einsatzzweck beispielsweise um Luft, Propan oder auch andere Gase, Gasgemische oder Kältemittel handeln. Ebenso kann es sich bei dem Fluid grundsätzlich auch um Flüssigkeiten handeln.

Erfindungsgemäß weist die Dichtung einen am Innenkörper vorsehbaren Innendichtkörper und einen am Außenkörper vorsehbaren Außendichtkörper mit einem Aufnahmeraum zur Aufnahme des Innendichtkörpers auf. Der Innenkörper kann hierbei integral den Innendichtkörper bilden, wobei der Innendichtkörper auch alternativ als separates Bauteil an dem Innenkörper angeordnet und in Radialrichtung dicht sowie zumindest drehfest fixiert oder fixierbar sein kann. Ebenso kann der Außenkörper den Außendichtkörper integral bilden, wobei auch hier der Außendichtkörper alternativ als separates Bauteil an dem Außenkörper angeordnet und in Radialrichtung dicht sowie zumindest drehfest fixiert oder fixierbar sein kann.

Der abzudichtende Radialspalt ist hierbei vorzugsweise zwischen dem Innendichtkörper und dem Außendichtkörper gebildet, wobei diese insbesondere konzentrisch zueinander und zu der Rotationsachse sowie diese in Umfangsrichtung vollständig umlaufend aneinander angeordnet sein können.

Weiter weist der Innendichtkörper eine konische Grundform auf und verjüngt sich von einer ersten Seite in Axialrichtung zu einer zweiten Seite stufenweise d.h. durch Ausbildung mehrerer Stufen, wobei die Stufen des Innendichtkörpers jeweils durch eine Radialaußenfläche und eine Axialaußenfläche bestimmt sind. Ebenso gilt für den Aufnahmeraum, dass dieser eine zu dem Innendichtkörper korrespondierende konische Grundform aufweist und dass der Aufnahmeraum sich von der ersten Seite in Axialrichtung zu der zweiten Seite stufenweise verjüngt, wobei die Stufen des Aufnahmeraums jeweils durch eine Radialinnenfläche und eine Axialinnenfläche bestimmt sind. Vorzugsweise ist der Innendichtkörper derart axial und radial gelagert, dass er in dem Aufnahmeraum in einer festen bzw. gleichbleibenden axialen Positionierung zu dem Außendichtkörper in Umfangsrichtung um die Rotationsachse rotieren kann, ohne den Außendichtkörper zu berühren. Jeweils einer Radialaußenfläche ist eine Radialinnenfläche zugeordnet, welche abschnittsweise berührungslos unter Bildung eines radialen Dichtspalts unmittelbar aneinander angrenzen bzw. anliegen. Die Radialinnenflächen überlappen in Axialrichtung also mit jeweils einer jeweiligen Radialaußenfläche. Einer jeweiligen Axialaußenfläche ist ferner jeweils eine Axialinnenfläche zugeordnet ist, welche unmittelbar benachbart und in Axialrichtung beabstandet bzw. vorzugsweise mit einem vorbestimmten Abstand zueinander gelagert sind, wobei die jeweilige Axialaußenfläche und die jeweils zugehörige Axialinnenfläche entsprechend in Radialrichtung überlappen, sodass zwischen den Axialaußenflächen und einer jeweils zugehörigen Axialinnenfläche jeweils eine Wirbelkammer zur Aufnahme eines Fluides gebildet ist. Die hierdurch gebildeten Wirbelkammern sind miteinander über die für das Fluid als Drosseln wirkenden radialen Dichtspalte verbunden.

Anders formuliert, ist jeweils einer Stufe des Innendichtkörpers die unmittelbar angrenzende Stufe des Außendichtkörpers zugeordnet, sodass diese ein Paar bilden, wobei die Stufen des Paares in Axialrichtung zueinander verschoben angeordnet sind, sodass die Radialflächen des Paares, d.h. die jeweilige Radialaußenfläche und die jeweilige Radialinnenfläche, abschnittsweise aneinander angrenzen sowie abschnittsweise frei voneinander sind und die Axialflächen des Paares, d.h. die jeweilige Axialaußenfläche und die jeweilige Axialinnenfläche, in Axialrichtung beabstandet sind und dadurch zwischen den Stufen des Paares unmittelbar eine Wirbelkammer gebildet ist. Da die Wirbelkammer mit Ausnahme der als Drossel wirkenden Dichtspalte vorzugsweise vollständig durch die Stufen des Paares begrenzt bzw. gebildet ist, sind keine nachteilhaften Lamellen, wie sie eingangs beschrieben wurden, notwendig.

Für die Radialaußen- und/oder Radialinnenflächen sowie auch für die Axialaußen- und/oder Axialinnenflächen gilt, dass diese die Rotationsachse vorzugsweise vollständig und ringförmig umlaufen, wobei sich zumindest die Radialinnenflächen vorzugsweise ausschließlich in einer jeweiligen einzigen Radialebene je Fläche erstrecken können und wobei sich die Axialaußen- und Axialinnenflächen vorzugsweise ausschließlich in einer jeweiligen einzigen Axialebene je Fläche erstrecken.

Eine vorteilhafte Variante der Erfindung sieht vor, dass an allen oder zumindest einem Teil der Radialaußenflächen eine jeweilige, die jeweilige Wirbelkammer in Radialrichtung erweiternde radiale Ausnehmung in dem Innendichtkörper vorgesehen ist. Die radiale Ausnehmung kann dabei auch als Nut oder Radialnut bezeichnet werden, welche sich in dem Innendichtkörper, die Rotationsachse vorzugsweise vollständig umlaufend erstreckt. Dadurch kann eine Radialaußenfläche, welche eine solche radiale Ausnehmung aufweist, in zwei Abschnitte geteilt werden, von welchen ein durch die Ausnehmung bestimmter erster Abschnitt in einer ersten Radialebene und ein zweiter, von der Ausnehmung freier Abschnitt in einer zweiten Radialebene liegt, wobei die zweite Radialebene entsprechend auf einem größeren Radius um die Rotationsachse verläuft als die erste Radialebene. Dadurch wird die Wirbelkammer vergrößert und durch den Materialabtrag zugleich das Gewicht des rotierbaren Innenkörpers reduziert.

Die jeweilige radiale Ausnehmung kann in Axialrichtung zu der ersten Seite durch die jeweilige Axialaußenfläche begrenzt sein oder vorzugsweise sprungfrei in diese übergehen.

Weiter kann die jeweilige radiale Ausnehmung in Axialrichtung zu der zweiten Seite bzw. eine Grenzfläche der Ausnehmung zu der zweiten Seite durch die jeweilige Axialinnenfläche bestimmt oder mit dieser bündig sein.

Hierdurch ergibt sich für die Wirbelkammern, dass diese in ihrer Grundform ihres Querschnitts vorzugsweise rechteckig sind, wobei die Kanten der Wirbelkammer beispielsweise auch gefast, gerundet oder oval sein können. Entsprechend verlaufen zwei der Kanten des Rechtecks vorzugsweise parallel der Rotationsachse und die zwei verbleibenden Kanten des Rechtecks vorzugsweise orthogonal zu der Rotationsachse.

Soweit eine radiale Ausnehmung vorgesehen ist, teilt diese die jeweilige Radialaußenfläche auch in Axialrichtung in einen ersten durch die Ausnehmung bestimmten Abschnitt mit einer ersten axialen Breite und einen zweiten von der Ausnehmung freien Abschnitt mit einer zweiten axialen Breite, welcher insbesondere einen Drosselspalt bestimmt. Wie tabellarisch noch aufgeführt, ist das Verhältnis der ersten axialen Breite zu der zweiten axialen Breite insbesondere zwischen 0,5 und 1,5, wobei die Breiten der Abschnitte vorzugsweise identisch sind, sodass also die erste axiale Breite des ersten Abschnitts gleich der zweiten axialen Breite des zweiten Abschnitts ist. Dabei kann die erste axiale Breite bzw. die axiale Breite des ersten Abschnitts auch als Wirbelkammerbreite und die zweite axiale Breite bzw. die axiale Breite des zweiten Abschnitts auch als Drosselbreite bezeichnet werden.

Die Wirbelkammern weisen in Axialrichtung eine jeweilige Wirbelkammerbreite und in Radialrichtung eine jeweilige Wirbelkammertiefe auf. Dabei wird die jeweilige Wirbelkammerbreite insbesondere durch den axialen Abstand der jeweiligen Axialaußenfläche zu der jeweiligen Axialinnenfläche und die jeweilige Wirbelkammertiefe zumindest anteilig durch die Erstreckung der Axialaußenfläche und des Dichtspalts in Radialrichtung bestimmt, wobei die Wirbelkammertiefe ferner zusätzlich durch eine gegebenenfalls vorhandene Ausnehmung bzw. der Ausnehmungstiefe bestimmt sein kann. Gemäß einer ersten erfindungsgemäßen Variante ist vorgesehen, dass die Wirbelkammerbreiten der Wirbelkammern zueinander variieren und/oder die Wirbelkammertiefen der Wirbelkammern zueinander variieren und weiter vorzugsweise derart variieren bzw. derart gewählt sind, dass sich in jeder Wirbelkammer für einen vorbestimmten Leckagestrom ein jeweils vorbestimmter Strömungswiderstand bzw. eine jeweils vorbestimmte Wirbelströmung einstellt.

Grundsätzlich gilt auch, dass die jeweils eine Drossel bildenden Dichtspalte in Axialrichtung eine jeweilige Drosselbreite und in Radialrichtung eine jeweilige Drosseltiefe aufweisen. Die jeweilige Drosselbreite wird dabei insbesondere durch eine axiale Länge der abschnittsweisen Überlappung der jeweiligen Radialaußenfläche mit der jeweiligen Radialinnenfläche und die jeweilige Drosseltiefe durch den radialen Abstand der jeweiligen Radialaußenfläche zu der jeweiligen Radialinnenfläche bestimmt. Gemäß einer zweiten erfindungsgemäßen Variante, welche mit der ersten erfindungsgemäßen Variante kombiniert oder alternativ zu dieser sein kann, ist vorgesehen, dass die Drosselbreiten der Dichtspalte zueinander variieren und/oder die Drosseltiefen der Dichtspalte zueinander variieren und insbesondere derart variieren bzw. derart gewählt sind, dass sich jedem Dichtspalt bzw. in jeder Drossel eine vorbestimmte Drosselwirkung d.h. für einen vorbestimmten Leckagestrom ein vorbestimmter Strömungswiderstand einstellt.

Entgegen einem Stand der Technik, welcher meist durch die gewählten Lamellen eine mehrteilige Ausführung erforderlich macht, ist vorliegend vorzugsweise vorgesehen, dass der Innendichtkörper einstückig ist, wobei auch der Außendichtkörper einstückig sein kann. Es ist entsprechend nicht notwendig jeweils zusätzliche Komponenten zur Bildung der Wirbelkammern und Drosseln an dem Innen- bzw. Außendichtkörper zu fixieren. Ist der Innendichkörper integral mit dem Innenkörper vorgesehen, kann dieser entsprechend auch einstückig ausgebildet sein. Analog gilt dies auch für den Außendichtkörper.

Weiter ist vorzugsweise vorgesehen, dass die Wirbelkammern und die radialen Dichtspalte insbesondere durch entsprechend gewählte Abmessungen bzw. radiale Positionierung der Wirbelkammern und Dichtspalte ausgebildet sind, durch das in den Wirbelkammern und Dichtspalten strömende Fluid an dem Innendichtkörper bei einer vorbestimmten Rotation des Innenkörpers zu dem Außenkörper bzw. des Innendichtkörpers zu dem Außendichtkörper d.h. bei einer vorbestimmten Rotationsgeschwindigkeit eine vorbestimmte axiale Kraft zu erzeugen, durch welche andere auf den Innendichtkörper wirkende axiale Kräfte ausgeglichen werden können. Dadurch kann durch das zwischen dem Innendichtkörper und dem Außendichtkörper strömende Fluid bei einem insbesondere durch die Rotationsgeschwindigkeit vorbestimmten Betriebspunkt beispielsweise eines Verdichters eine vorbestimmte Axialkraft auf den Innendichtkörper erzeugt werden, durch welche andere, auf den Innendichtkörper wirkende axiale Kräfte, auch ausgeglichen werden können bzw. die auf den Innendichtkörper wirkende, resultierende Axialkraft in vorbestimmtem Maße reduziert wird.

Ein weiterer Aspekt der Erfindung betrifft eine Vorrichtung, bei welcher es sich insbesondere um einen Verdichter und weiter vorzugsweise um einen Zentrifugalkompressor handelt. Die Vorrichtung weist ein Gehäuse und ein in dem Gehäuse um eine Rotationsachse rotierbar gelagertes Laufrad auf, wobei das Gehäuse insbesondere im Falle eines Zentrifugalkompressors auch als Maschinengehäuse bezeichnet werden kann. Bei der vorgeschlagenen Vorrichtung ist das Laufrad integral als ein um die Rotationsachse rotierbarer Innenkörper ausgebildet oder an einer Welle fixiert, welche als der um die Rotationsachse rotierbare Innenkörper ausgebildet ist. Analog dazu ist das Gehäuse integral als ein den Innenkörper in Umfangsrichtung umlaufender radialäußerer Außenkörper ausgebildet oder nimmt den Außenkörper auf, welcher den Innenkörper in Umfangsrichtung umläuft. Ein zwischen dem Innenkörper und dem Außenkörper gebildeter Radialspalt, welcher notwendig ist, um die Rotation des Laufrades gegenüber dem Gehäuse zu ermöglichen, ist hierbei durch eine erfindungsgemäß vorgeschlagene Dichtung abgedichtet.

Vorzugsweise ist weiter vorgesehen, dass der Innendichtkörper der Dichtung an dem Innenkörper fixiert ist oder weiter bevorzugt der Innenkörper integral als Innendichtkörper der Dichtung ausgebildet ist, sodass also der Innenkörper integral d.h. einstückig das Laufrad und den Innendichtkörper bilden kann. Ebenso gilt, dass der Außendichtkörper an dem Außenkörper fixiert sein kann oder bevorzugt vorgesehen ist, dass der Außenkörper integral als Außendichtkörper ausgebildet ist.

Wie im Zusammenhang mit der Dichtung bereits erläutert, kann vorgesehen sein, dass durch die Wirbelkammern und Dichtspalte bzw. das diese durchströmende Fluid bei einer vorbestimmten Rotationsgeschwindigkeit bzw. einem vorbestimmten Betriebspunkt der Vorrichtung eine vorbestimmte, auf den Innendichtkörper wirkende axiale Kraft erzeugt werden kann. Ausgehend von der Vorrichtung bzw. dem Zentrifugalkompressor ist entsprechend weiter vorzugsweise vorgesehen, dass die Wirbelkammern und die radialen Dichtspalte derart ausgebildet sind bzw. allgemein die Dichtung derart ausgebildet ist, dass durch das die Wirbelkammern bzw. die Dichtspalte durchströmende Fluid an dem Innendichtkörper bei einer vorbestimmten Rotation d.h. Rotationsgeschwindigkeit des Laufrades um die Rotationsachse bzw. bei einem vorbestimmten Betriebspunkt des Laufrades eine vorbestimmte axiale Kraft zum Ausgleich und/oder zur Reduktion von auf den Innendichtkörper und/oder das Laufrad entgegengesetzt wirkender axialer Kräfte erzeugt werden kann, sodass entsprechend andere durch die Rotation des Laufrades an dem Laufrad erzeugte axiale Kräfte ausgeglichen oder zumindest reduziert werden können. Entsprechend kann durch die Dichtung an dem Laufrad ein Axialschubausgleich oder zumindest eine Axialschubreduktion realisiert werden, sodass bei einem vorbestimmten Betriebspunkt der Vorrichtung die aus der Summe aller am Laufrad angreifenden axialen Kräfte resultierende Axialkraft am Laufrad null ist bzw. diese innerhalb der vorbestimmten Belastungsgrenzen einer Axiallagerung des Laufrades liegt.

Konkret kann durch die Dichtung die radiale Verteilung des statischen Druckes im tragscheibenseitigen Radseitenraum derart verändert werden, dass daraus die vorbestimmte, auf die Tragscheibe wirkende axiale Kraft resultiert. Beispielsweise durch eine entsprechende radiale Positionierung der Dichtung kann ein Axialschubausgleich (Kräftegleichgewicht) aller auf das Laufrad wirkenden Kräfte realisiert oder die resultierenden Axialkräfte auf ein innerhalb der vorbestimmten Belastungsgrenzen des Axiallagers liegendes Maß reduziert werden.

Unabhängig davon, ob unmittelbar von der erfindungsgemäß vorgeschlagenen Dichtung oder der Vorrichtung bzw. dem Zentrifugalkompressor ausgegangen wird, welche(r) eine solche Dichtung umfasst, gilt, dass die nachfolgenden genannten Abmessungen bzw. Beziehungen von Abmessungen zueinander einzeln oder in ihrer Gesamtheit besonders bevorzugt sind, da sich in Versuchen eine besonders vorteilhafte Dichtwirkung insbesondere bei mehr als 50.000 U/min gezeigt hat:

| | | |
|---|---|---|
| Laufradaußenradius | R1 | 5 mm ≤ R1 ≤ 100 mm insbesondere |
| | | 8 mm ≤ R1 ≤ 25 mm |
| Außenradius an der ersten Seite des Innendichtkörpers | R2 | 0,2 ≤ R2/R1 ≤ 1 insbesondere |
| | | 0,7 ≤ R2/R1 ≤ 1 |
| Außenradius an der zweiten Seite des Innendichtkörpers | R3 | 0,1 ≤ R3/R1 ≤ 1 insbesondere |
| | | 0,6 ≤ R3/R1 ≤ 0,8, |
| | | wobei vorzugsweise jeweils zusätzlich gilt R3 < R2 |
| Drosseltiefe | a | 10 µm ≤ a ≤ 100 µm insbesondere |
| | | 20 µm ≤ a ≤ 40 µm |
| Wirbelkammerbreite | b | 5 ≤ b/a ≤ 500 insbesondere |
| | | 10 ≤ b/a ≤ 40 |
| Drosselbreite | c | 5 ≤ c/a ≤ 500 insbesondere |
| | | 10 ≤ c/a ≤ 40 insbesondere |
| | | 17 ≤ c/a ≤ 24 |
| Drosselabstand | d | d = b + c |
| Wirbelkammertiefe | e | 5 ≤ e/a ≤ 500 insbesondere |
| | | 10 ≤ e/a ≤ 60 |
| Ausnehmungstiefe | f | 0 ≤ f/a ≤ 499 insbesondere |
| | | 0 ≤ f/a ≤ 59 oder |
| | | bei keiner Ausnehmung f = 0 bzw. f/a = 0 |
| Verhältnis Wirbelkammerbreite b zu Drosselbreite c | | 0,5 ≤ b/c ≤ 1,5 insbesondere |
| | | b/c = 1 |

Der Laufradaußenradius entspricht dabei dem Radius des Laufrades oder dessen Tragscheibe unmittelbar am Innendichtkörper bzw. unmittelbar am Innenkörper. Der Außenradius an der ersten Seite des Innendichtkörpers entspricht vorzugsweise sowohl einem maximalen Außenradius des Innendichtkörpers als auch dem Radialmaß einer ersten Stufe bzw. einer ersten Radialaußenfläche an der ersten Seite. Analog dazu entspricht der Außenradius an der zweiten Seite des Innendichtkörpers vorzugsweise einem minimalen Außenradius des Innendichtkörpers als auch dem Radialmaß einer letzten Stufe bzw. einer letzten Radialaußenfläche an der zweiten Seite, wobei hierbei eine den Außenradius bestimmungsgemäß weiter reduzierende radiale Ausnehmung vernachlässigt ist.

Bei einer Ausnehmungstiefe von f = 0 ist entsprechend keine Ausnehmung vorhanden.

Wie bereits genannt, können die Maße der Drosseln und die Maße der Wirbelkammern variieren, sodass die Maße der Drosseln (a1 bis a5, c1 bis c5, d1 bis d5) voneinander abweichen oder gleich sein können sowie auch die Maße der Wirbelkammern (b1 bis b4, e1 bis e4, f1 bis f4) voneinander abweichen oder gleich sein können. Jedes dieser Maße (a1 bis a5, b1 bis b4, c1 bis c5, d1 bis d5, e1 bis e4, f1 bis f4) kann für sich entsprechend der tabellarisch gegebenen Abmessungen bzw. Beziehungen gewählt sein.

Die vorstehend offenbarten Merkmale sind beliebig kombinierbar, soweit dies technisch möglich ist und diese nicht im Widerspruch zueinander stehen.

Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: perspektivische Darstellung einer ersten Variante einer Dichtung;
- Fig. 2: die erste Variante der Dichtung im Längsschnitt;
- Fig. 3: perspektivische Darstellung einer zweiten Variante einer Dichtung;
- Fig. 4: die zweite Variante der Dichtung im Längsschnitt.

Die Figuren sind beispielhaft schematisch. Gleiche Bezugszeichen in den Figuren weisen auf gleiche funktionale und/oder strukturelle Merkmale hin.

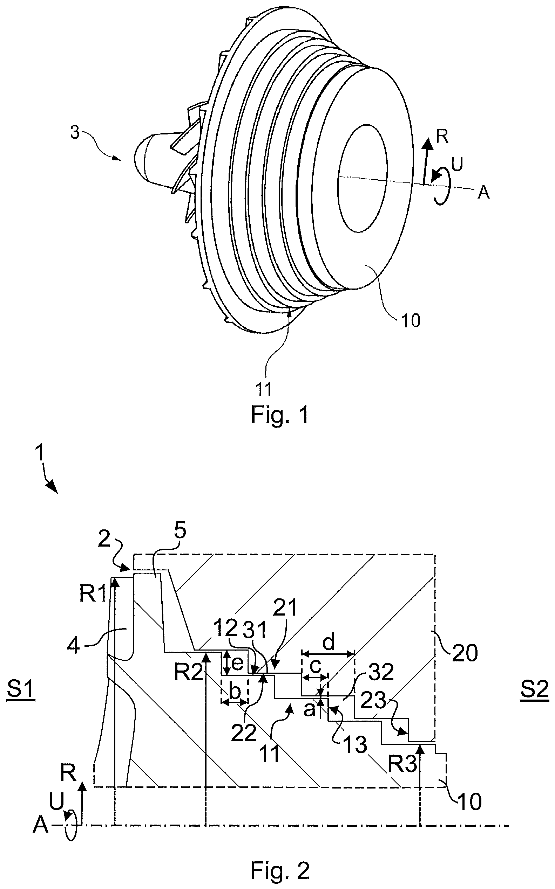

In den Figuren 1 und 2 ist eine erste Variante einer Dichtung 1 am Beispiel eines integral als Innenkörper und Innendichtkörper 10 ausgebildeten Laufrades 3 insbesondere eines Zentrifugalkompressors dargestellt, wobei Figur 2 einen Ausschnitt eines Längsschnittes entlang der Rotationsachse A zeigt. Das Laufrad 3 weist dabei Laufradschaufeln 4 und eine Tragscheibe 5 auf, mit welcher das Laufrad 3 im Wesentlichen bündig mit dem umliegen als Außenkörper ausgebildeten Außendichtkörper 20 abschließt, welcher ein Maschinengehäuse bildet.

Die Dichtung 1 wird ausschließlich durch den Innendichtkörper 10 und den Außendichtkörper 20 gebildet, welche jeweils einstückig sind, sodass also keine zusätzlichen Montageschritte zur Fixierung weiterer Bauteile notwendig sind.

Der Innendichtkörper 10 besitzt eine konische Grundform und verjüngt sich entlang der Axialrichtung von einer ersten Seite S1 zu einer zweiten Seite S2 stufenweise über mehrere Stufen 11. Der Außendichtkörper 20 weist einen dazu korrespondierenden Aufnahmeraum auf, welcher sich entsprechend ebenfalls von der ersten Seite S1 in Axialrichtung d.h. entlang der Rotationsachse A zu der ersten Seite S2 hin über mehrere Stufen 21 verjüngt.

Wesentlich ist, dass jeweils eine Stufe 11 des Innendichtkörper 10 einer Stufe 21 des Außendichtkörpers 20 zugeordnet aber diese zueinander in Axialrichtung verschoben sind, sodass sich also eine Radialaußenfläche 12 der jeweiligen Stufe 11 des Innendichtkörpers 10 und eine Radialinnenfläche 22 der jeweiligen Stufe 21 des Außendichtkörpers 20 berührungslos aneinander anliegen, d.h. ein als Drossel 31 wirkender Dichtspalt 31 zwischen ihnen gebildet ist, eine Axialaußenfläche 13 der jeweiligen Stufe 11 des Innendichtkörpers 10 und eine Axialinnenfläche 23 der jeweiligen Stufe 21 des Außendichtkörpers 20 jedoch in Axialrichtung soweit beabstandet sind, dass zwischen ihnen eine Wirbelkammer 32 gebildet ist, in welchen ein durch den Radialspalt 2, d.h. von der ersten Seite S1 zur zweiten Seite S2 strömendes Fluid, gezielt verwirbelt und der Strömungswiderstand für einen solche Leckagestrom des Fluides von der ersten Seite S1 zu der zweiten Seite S2 erhöht werden kann.

Das in Figur 1 und 2 dargestellte Laufrad 3 besitzt zudem angrenzend an der Tragscheibe 5 des Laufrades 3 einen Laufradaußenradius R1, welcher sowohl größer einem Außenradius R2 an der ersten Seite S1 des Innendichtkörpers 10 als auch größer einem Außenradius R3 an der zweiten Seite S2 des Innendichtkörpers 10 ist. Dabei entspricht bzw. bestimmt der Außenradius R2 zugleich die Radialaußenfläche 12 angrenzend an eine in Axialrichtung von der ersten Seite S1 zu der zweiten Seite S2 erste Stufe 11 des Innendichtkörpers 10 und der Außenradius R3 zugleich die Radialaußenfläche 12 einer in Axialrichtung von der ersten Seite S1 zu der zweiten Seite S2 letzten Stufe 11 von vier Stufen 11 des Innendichtkörpers 10.

Jede Drossel 31 bzw. jeder Dichtspalt 31 besitzt dabei eine jeweilige Drosseltiefe a entsprechend seiner Erstreckung in Radialrichtung R sowie eine jeweilige Drosselbreite c entsprechend seiner Erstreckung in Axialrichtung. Die Drosseltiefen a sowie auch die Drosselbreiten c der Dichtspalte 31 können dabei untereinander abweichen. Die Drosseltiefen a liegen beispielsweise in einem Bereich von jeweils zwischen 10 µm und 100 µm, wobei für ein Verhältnis der Drosselbreiten c zu den jeweiligen Drosseltiefen a beispielsweise 5 ≤ c/a ≤ 500 gilt.

Zudem wird auch jede der Wirbelkammern 32 durch eine jeweilige Wirbelkammertiefe e entsprechend ihrer Erstreckung in Radialrichtung R sowie durch eine jeweilige Wirbelkammerbreite b entsprechend ihrer Erstreckung in Axialrichtung bestimmt. Auch hier gilt, dass die Wirbelkammertiefen e und die Wirbelkammerbreiten b der vorliegend vier Wirbelkammern 32 untereinander abweichen können, wobei für die dargestellte Variante gilt, dass die Wirbelkammerbreite b und die Wirbelkammertiefe e derart gewählt sind, dass sich für ein Verhältnis der Wirbelkammertiefe e zu der Drosseltiefe a vorteilhaft zwischen 5 und 500 ergibt.

Durch eine Rotation des Innendichtkörpers 10 zusammen bzw. integral mit dem Laufrad 3 um die Rotationsachse A und relativ zu dem Außendichtkörper 20, wird in den Wirbelkammern 32 und durch die Dichtspalte 31, welche als Drosseln 31 wirkend die Wirbelkammern 32 verbinden, in einem vorbestimmten Drehzahlbereich ein vorbestimmter Strömungswiderstand eingestellt, sodass nur noch ein geringer und ebenso vorbestimmter Leckagestrom eines Fluides von der ersten Seite S1 zu der zweiten Seite S2 strömen kann.

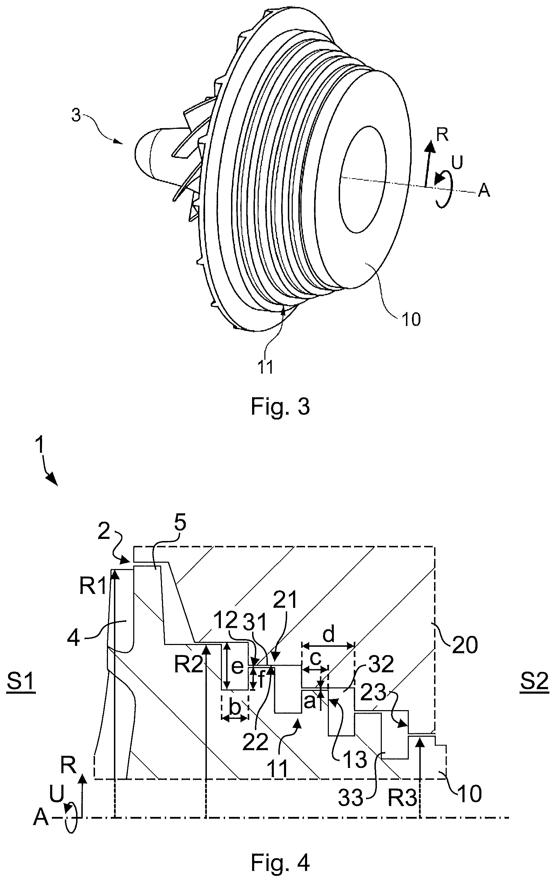

Die Dichtung 1 kann weiter optimiert werden, wenn ihr Gewicht reduziert wird. Daher ist zudem eine Variante vorteilhaft, wie sie durch die Figuren 3 und 4 dargestellt ist, wobei diese - soweit nicht anders angegeben - mit der in den Figuren 1 und 2 dargestellten Ausführung übereinstimmt, sodass auch die zugehörige Beschreibung analog gilt.

Bei der Dichtung 1, wie sie in den Figuren 3 und 4 abgebildet ist, ist daher an jeder der Stufen 11 des Innendichtkörpers 11 eine radiale Ausnehmung 33 mit einer Breite gleich der Wirbelkammerbreite b vorgesehen, sodass die Ausnehmung 33 die jeweilige Wirkbelkammer 32 in Radialrichtung R in den Innendichtkörper 10 erweitert. Im Vergleich zu der Variante gemäß den Figu-ren 1 und 2 entspricht die Ausnehmungstiefe f der Ausnehmungen 33 in Radialrichtung R der dortigen Wirbelkammertiefe e, sodass die Wirbelkammertiefe e und zugleich das dadurch bestimmte Volumen der Wirbelkammern 32 bei der Variante gemäß den Figuren 3 und 4 verdoppelt ist.

## Patentansprüche

1. Berührungslose dynamische Dichtung (1) zur Abdichtung eines Radialspalts (2) zwischen einem radialinneren Innenkörper und einem den Innenkörper in Umfangsrichtung (U) umlaufenden radialäußeren Außenkörper, welche relativ zueinander um eine Rotationsachse (A) rotierbar sind,
wobei die Dichtung (1) einen am Innenkörper vorsehbaren Innendichtkörper (10) und einen am Außenkörper vorsehbaren Außendichtkörper (20) mit einem Aufnahmeraum zur Aufnahme des Innendichtkörpers (10) aufweist,
wobei der Innendichtkörper (10) eine konische Grundform aufweist und sich von einer ersten Seite (S1) in Axialrichtung zu einer zweiten Seite (S2) stufenweise verjüngt, wobei die Stufen (11) des Innendichtkörpers jeweils durch eine Radialaußenfläche (12) und eine Axialaußenfläche (13) bestimmt sind,
wobei der Aufnahmeraum eine zu dem Innendichtkörper (10) korrespondierende konische Grundform aufweist und sich von der ersten Seite (S1) in Axialrichtung zu der zweiten Seite (S2) stufenweise verjüngt, wobei die Stufen (21) des Aufnahmeraums jeweils durch eine Radialinnenfläche (22) und eine Axialinnenfläche (23) bestimmt sind,
wobei jeweils einer Radialaußenfläche (12) eine Radialinnenfläche (22) zugeordnet ist, welche abschnittsweise berührungslos unter Bildung eines radialen Dichtspalts (31) unmittelbar aneinander angrenzen, und einer jeweiligen Axialaußenfläche (13) jeweils eine Axialinnenfläche (23) zugeordnet ist, welche in Axialrichtung beabstandet sind, sodass zwischen den Axialaußenflächen (13) und den Axialinnenflächen (23) jeweils eine Wirbelkammer (32) zur Aufnahme eines Fluides gebildet ist, welche miteinander über die für das Fluid als Drosseln (31) wirkenden radialen Dichtspalte (31) verbunden sind,
wobei die Wirbelkammern (32) in Axialrichtung eine jeweilige Wirbelkammerbreite (b) und in Radialrichtung (R) eine jeweilige Wirbelkammertiefe (e) aufweisen und
wobei die jeweils eine Drossel (31) bildenden Dichtspalte (31) in Axialrichtung eine jeweilige Drosselbreite (c) und in Radialrichtung (R) eine jeweilige Drosseltiefe (a) aufweisen
**dadurch gekennzeichnet, dass**
die Wirbelkammerbreiten (b) der Wirbelkammern (32) zueinander variieren und/oder die Wirbelkammertiefen (e) der Wirbelkammern (32) zueinander variieren und/oder
die Drosselbreiten (c) der Dichtspalte (31) zueinander variieren und/oder die Drosseltiefen (a) der Dichtspalte (31) zueinander variieren.

2. Dichtung nach Anspruch 1,
wobei an allen oder zumindest einem Teil der Radialaußenflächen (12) eine jeweilige, die jeweilige Wirbelkammer (32) in Radialrichtung (R) erweiternde radiale Ausnehmung (33) vorgesehen ist.

3. Dichtung nach Anspruch 2,
wobei die jeweilige radiale Ausnehmung (33) in Axialrichtung zu der ersten Seite (S1) durch die jeweilige Axialaußenfläche (13) begrenzt ist oder in diese übergeht und/oder zu der zweiten Seite (S2) durch die jeweilige Axialinnenfläche (23) bestimmt oder zu dieser bündig ist.

4. Dichtung nach Anspruch 2 oder 3,
wobei eine jeweilige radiale Ausnehmung (33) die jeweilige Radialaußenfläche (12) in Axialrichtung in einen ersten durch die Ausnehmung (33) bestimmten Abschnitt mit einer ersten axialen Breite (b) und einen zweiten von der Ausnehmung freien Abschnitt mit einer zweiten axialen Breite (c) teilt.

5. Dichtung nach einem der vorhergehenden Ansprüche, wobei die Wirbelkammern (32) in ihrer Grundform im Querschnitt rechteckig sind.

6. Dichtung nach einem der vorhergehenden Ansprüche,
wobei der Innendichtkörper (10) einstückig ist und/oder
wobei der Außendichtkörper (20) einstückig ist.

7. Dichtung nach einem der vorhergehenden Ansprüche,
wobei die Wirbelkammern (32) und die radialen Dichtspalte (31) ausgebildet sind, an dem Innendichtkörper (10) bei einer vorbestimmten Rotation des Innenkörpers zu dem Außenkörper durch das Fluid eine vorbestimmte axiale Kraft zu erzeugen.

8. Vorrichtung, insbesondere Zentrifugalkompressor, mit einem Gehäuse und einem in dem Gehäuse um eine Rotationsachse (A) rotierbar gelagerten Laufrad (3),
wobei das Laufrad (3) integral als ein um die Rotationsachse (A) rotierbarer Innenkörper ausgebildet ist oder an einer Welle fixiert ist, welche als der um die Rotationsachse (A) rotierbare Innenkörper ausgebildet ist,
wobei das Gehäuse integral als ein den Innenkörper in Umfangsrichtung (U) umlaufender radialäußerer Außenkörper ausgebildet ist oder den Außenkörper aufnimmt,
wobei ein zwischen dem Innenkörper und dem Außenkörper gebildeter Radialspalt (2) durch eine Dichtung (1) gemäß einem der vorhergehenden Ansprüche abgedichtet ist.

9. Vorrichtung nach dem vorhergehenden Anspruch,
wobei der Innendichtkörper (10) an dem Innenkörper fixiert oder der Innenkörper integral als Innendichtkörper ausgebildet ist und/oder
wobei der Außendichtkörper (20) an dem Außenkörper fixiert oder der Außenkörper integral als Außendichtkörper ausgebildet ist.

10. Vorrichtung nach einem der vorhergehenden Ansprüche 8 oder 9,
wobei die Wirbelkammern (32) und die radialen Dichtspalte (31) ausgebildet sind, bei einer vorbestimmten Rotation und/oder in einem vorbestimmten Betriebspunkt des Laufrades (3) durch das Fluid an dem Innendichtkörper (10) eine vorbestimmte axiale Kraft zum Ausgleich und/oder zur Reduktion von auf den Innendichtkörper (10) und/oder das Laufrad (3) entgegengesetzt wirkender axialer Kräfte zu erzeugen.
